# EUROPÄISCHE PATENTSCHRIFT

(11) **EP 2 805 083 B1**
(45) Veröffentlichungstag und Bekanntmachung des Hinweises auf die Patenterteilung: **02.03.2016**
(21) Anmeldenummer: 13701585.5
(22) Anmeldetag: 13.01.2013
(51) Int. Cl.: F16G 11/04, F16G 11/02

(54) **SEILENDVERBINDUNG UND SEILHÜLSE FÜR EINE SEILENDVERBINDUNG**
CABLE END CONNECTION AND CABLE SOCKET FOR A CABLE END CONNECTION
CONNEXION DE CÂBLE ET MANCHON DE CÂBLE POUR UNE CONNEXION DE CÂBLE

(30) Priorität: 17.01.2012 DE 202012100161 U
(43) Veröffentlichungstag der Anmeldung: 26.11.2014
(73) Patentinhaber: E.V.A. GmbH, 48529 Nordhorn (DE)
(72) Erfinder: LENTING, Jakob, 48529 Nordhorn (DE)
(74) Vertreter: ten Brink, Carsten
(86) Internationale Anmeldenummer: PCT/EP2013/050530
(87) Internationale Veröffentlichungsnummer: WO 2013/107701

(56) Entgegenhaltungen:
- DE-U- 6 801 874
- GB-A- 2 255 354
- US-A- 4 068 963
- US-A1- 2006 160 435
- US-A1- 2009 304 441

## Beschreibung

Die Erfindung betrifft eine Seilendverbindung, insbesondere eine Seilendverbindung für Draht- oder Stahlseile. Seilendverbindungen sind zum Beispiel zur Kombination von Seilenden mit Gabel- oder Bügelseilhülsen (open spelter sockets), Ösenseilhülsen (closed spelter sockets) und dergleichen bekannt. Gabel- und Bügelseilhülsen und dergleichen werden im Folgenden zusammenfassend und ohne Verzicht auf eine weitergehende Allgemeingültigkeit kurz als Seilhülsen bezeichnet. Aus der US 2006/160435 ist eine Seilendhülse nach dem Oberbegriff des Anspruchs 1 bekannt.

Bekannt ist eine Seilendverbindung, bei der das Seilende in einem auch als Seilbirne bezeichneten Ende einer Seilhülse vergossen wird. Damit die Verbindung genügend Zugfestigkeit besitzt, wird das Seilende nach dem Einführen in die Seilhülse aufgeflochten und die aufgeflochtenen Litzen des Seilendes werden in der Seilhülse mit einem Vergussmedium fixiert. Üblicherweise haben solche Seilhülsen ein konisches Innenvolumen, wobei an einem unteren, zur Einführung des Seils vorgesehenen Ende dieser Innenkonus seinen geringsten Durchmesser aufweist. Eine solche Seilendverbindung ist zum Beispiel aus der DE 68 01 874 U bekannt. Die US 985,915 beschreibt eine Seilendverbindung, bei der eine mutmaßlich ähnlich belastbare Kombination mit dem jeweiligen Seil mittels eines konischen Keils, der die Seilenden aufspreizt, erfolgen soll.

Vergossene Seilhülsen zeichnen sich durch eine hohe Zugkraftbelastbarkeit aus und bei einer Überlastung eines Seils kommt es normalerweise eher zu einem Seilbruch als zu einem Ausreißen eines in einer Seilhülse vergossenen Seils aus der Seilhülse. Man spricht daher von einer Zugkraftbelastbarkeit dieser Seilendverbindungen von 100% der Bruchfestigkeit des Seils oder zumindest einer Zugkraftbelastbarkeit nahe 100% der Bruchfestigkeit des Seils.

Nachteilig bei bekannten Seilendverbindungen ist jedoch, dass sich Seile beim Gebrauch längen, speziell wenn ein Seil einer dynamischen Belastung ausgesetzt ist. Als dynamische Belastung wird dabei eine Belastung verstanden, die sich zum Beispiel beim mehrfachen Anheben und Absenken von Lasten ergibt oder wie sie sich ergibt, wenn Lasten pendeln. Eine besonders hohe dynamische Belastung ist gegeben, wenn die beiden vorgenannten Belastungsarten in Kombination auftreten.

Als Seilendverbindungen sind auch sogenannte Keilendklemmen (open wedge sockets) bekannt. Diese weisen ein zur Aufnahme eines Keils vorgesehenes Gehäuse auf. Das Seil wird in das Gehäuse eingeführt, umläuft den Keil und das freie Ende des Seils wird an der Eintrittsseite wieder aus dem Gehäuse ausgeleitet. Bei Belastung des Seils pressen die auf das Seil einwirkenden Kräfte den Keil in das Gehäuse, so dass damit diese Seilverbindung zugbelastungsstabil wird.

Keilendklemmen haben den Vorteil, dass eine im Gebrauch erfolgte Längung des jeweiligen Seils kompensiert werden kann, indem das Seil in dem Gehäuse über den Keil nachgeführt wird und anschließend das Seilende wieder mit dem Keil fixiert wird. Allerdings wird das Seil in dem Gehäuse nicht nur einer Zugbelastung, sondern auch einer Druckbelastung ausgesetzt, so dass diese Seilendverbindung normalerweise nur eine Bruchkraft aufweist, die deutlich unter der Bruchkraft des Seils liegt. Üblich sind Bruchkräfte im Bereich von 80% der Bruchkraft des Seils.

Wünschenswert wäre demnach eine Seilendverbindung mit einerseits einer Bruchkraft im Bereich der Bruchkräfte, wie sie von vergossenen Seilendverbindungen bekannt sind, insbesondere mit einer Bruchkraft die über oder sogar deutlich über der Bruchkraft des Seils liegt, die anderseits eine Anpassung an eine eventuelle Längung des Seils erlaubt.

Diese Aufgabe wird erfindungsgemäß mit einer Seilendhülse mit den Merkmalen des Anspruchs 1 gelöst. Dazu ist eine zumindest zweiteilige Seilendhülse mit einem äußeren Gehäuse und einem zur Aufnahme eines Seilendes vorgesehenen inneren Gehäuse vorgesehen, bei der mit dem inneren Gehäuse ein Seilende durch Vergießen des Seilendes im inneren Gehäuse verbindbar ist und bei der eine lösbare Verbindbarkeit des inneren Gehäuses mit dem äußeren Gehäuse eine Anpassung einer axialen Position des inneren Gehäuses im äußeren Gehäuse erlaubt.

Aus der DE 298 11 002 U ist ein Gabelterminal zur Verwendung als Endstück zum Beispiel bei Drahtseilen bekannt. Das Drahtseil ist allerdings nur mittels einer Presshülse mit einem in das Gabelterminal einschraubbaren Gewindeterminal verbunden. Die Bruchkraft solcher Presshülsen liegt deutlich unterhalb der Bruchkraft des Seils, so dass die mit dem Gewindeterminal erreichbare Längeneinstellbarkeit nur für solche Anwendungsfälle in Betracht kommt, bei denen die verringerte Bruchkraft in Kauf genommen werden kann. Bei dem aus der o.g. DE 68 01 874 U bekannten Seilendstück ist zwar eine Zweiteiligkeit der Seilendverbindung in Form einer Öse mit einem Seilbefestigungsabschnitt einerseits sowie einem Seildurchführungsstück andererseits gegeben, eine Längeneinstellbarkeit ist jedoch nicht möglich. Die US 853,705 zeigt eine Vorrichtung zur Verbindung eines Verankerungsstabs mit einem Abspanndraht in Form einer zweiseitigen Hülse, die an der einen Seite auf ein Gewinde des Verankerungsstabs aufgeschraubt wird und in die auf der anderen Seite der Abspanndraht eingeführt und dort mit federbelasteten Keilen durch Reibschluss gehalten wird. Die Hülse kann mit einem Werkzeug gedreht werden, so dass die Verbindung zwischen Verankerungsstab und Abspanndraht gespannt werden kann.

Der Vorteil der Erfindung besteht darin, dass mit einer Anpassung einer axialen Position des inneren Gehäuses im äußeren Gehäuse eine Kompensation einer eventuellen Längung eines mit der Seilendhülse kombinierten Seils möglich ist. Wenn sich ein Seil zum Beispiel um fünf Millimeter gelängt hat, kann die axiale Position des inneren Gehäuses in Bezug auf das äußere Gehäuse so verstellt werden, dass eine Gesamtlänge von Seil und Seilendhülse wieder der ursprünglichen Gesamtlänge von Seil und Seilendhülse vor der Längung des Seils entspricht. Zum Erhalt einer ausreichenden Bruchfestigkeit ist dabei vorgesehen, dass das Seilende mit der Seilendhülse, nämlich deren innerem Gehäuse, durch Vergießen verbunden ist. Bei einer besonderen Ausführungsform ist dabei vorgesehen, dass das innere Gehäuse zur Aufnahme des Seilendes ein sich verjüngendes, insbesondere konisch geformtes Innenvolumen aufweist.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombihationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.]

Bei der Seilendhülse ist die lösbare Verbindbarkeit und die Möglichkeit zur Anpassung einer axialen Position des inneren Gehäuses im äußeren Gehäuse realisiert, indem das innere Gehäuse ein Außengewinde und das äußere Gehäuse in einem zur Aufnahme des inneren Gehäuses vorgesehenen Bereich ein auf das Außengewinde abgestimmtes Innengewinde aufweist, so dass die axiale Position des inneren Gehäuses im äußeren Gehäuse durch Einschrauben des inneren Gehäuses in das äußere Gehäuse anpassbar ist. Der Vorteil besteht vor allem darin, dass das Zusammenwirken der beiden Gewindeteile (Innen- und Außengewinde) zur Aufnahme der zu erwartenden Kräfte gut geeignet sind. Zudem ist bei einem Gewinde eine besonders genaue Anpassung der axialen Position, abhängig von der jeweiligen Gewindesteigung möglich. Schließlich ist eine Anpassung einer axialen Position über ein Gewinde intuitiv bedienbar und lässt sich bei besonders großen und schweren Seilhülsen auch gut mit geeignetem Werkzeug unterstützen. Bei kleineren Seilendhülsen ist sogar auf rein manuellem Weg eine Anpassung der axialen Position möglich. Als Alternative zu einem Gewinde kommt eine im äußeren oder inneren Gehäuse gebildete Kulisse in Betracht, die zumindest abschnittsweise wie eine Formschlussaufnahme fungiert, wobei in solche Formschlussaufnahmen im inneren bzw. äußeren Gehäuse gebildete Formschlusselemente, zum Beispiel Abstellungen in Form von Zapfen, eingreifen. Ein Beispiel für eine solche Kulisse und korrespondierende Formschlusselemente ist eine Gestaltung, wie sie von einem Bajonettverschluss, insbesondere einem mehrstufigen Bajonettverschluss, bekannt ist. Zur Aufnahme größerer Kräfte, wie sie sich beim Heben von Lasten ohne Weiteres ergeben können, kann bei einer solchen Kulisse vorgesehen sein, dass ein bei einem Bajonettverschluss als Zapfen ausgebildetes Formschlusselement in Form eines Stegs ausgeführt ist, so dass anstelle einer punktförmigen Auflage- und Kraftübertragungsfläche die gesamte Länge des Stegs wirksam wird. Außerdem können mehrere Stege in jeweils eine Formschlussaufnahme eingeführt sein, so dass eine Mehrzahl von Stegen an der Kraftaufnahme/Kraftübertragung beteiligt ist. Die Stege und die Formschlussaufnahmen können eine Länge von bis zu der halben Umfangslinie des inneren Gehäuses aufweisen.

Wenn das äußere Gehäuse Bohrungen, Schlitze oder dergleichen zum Einführen eines Stifts und das innere Gehäuse an einer Oberkante ein oder mehrere Abstellungen aufweist, kann ein in eine Bohrung eingeführter oder ein oder durch zwei gegenüberliegende Bohrungen geführter Stift, Bolzen oder dergleichen im eingeführten Zustand mit jeweils zumindest einer Abstellung zusammenwirken, derart, dass der Stift bei einer Drehung des inneren Gehäuses im äußeren Gehäuse für die Abstellung oder jeweils zumindest eine Abstellung als Anschlag wirkt, so dass zumindest eine Vollumdrehung des inneren Gehäuses im äußeren Gehäuse verhindert ist. Die Drehbarkeit des inneren Gehäuses im äußeren Gehäuse ist damit begrenzt. Damit ist wirksam verhindert, dass eine vorgenommene Längenanpassung bei Benutzung der Seilendhülse/Seilendverbindung wieder verschwindet, indem sich das innere Gehäuse im äußeren Gehäuse dreht. Zudem ist sichergestellt, dass das innere Gehäuse nicht aus dem äußeren Gehäuse herausgedreht werden kann, und damit die Verbindung zwischen Seil und dem jeweiligen Kontaktmittel der Seilhülse, bei einer Bügelseilhülse also der am Ende befindlichen Öse, bei einer Gabelseilhülse den am Ende befindlichen Gabelenden mit einem dort einführbaren Bolzen, usw., abreißt. Dies würde nämlich, wenn mit der Seilverbindung/der Seilhülse eine Last bewegt wird, dazu führen, dass die Last nicht mehr oder nicht mehr vollständig gehalten wird.

Insgesamt betrifft die Erfindung damit eine Seilendverbindung, bei der ein Draht- oder Stahlseil mit einer Seilhülse wie hier und nachfolgend beschrieben kombiniert ist. Zur Kombination des Seilendes mit der Seilhülse, nämlich deren innerem Gehäuse, ist bei einer Ausführungsform das Seilende im inneren Gehäuse der Seilhülse mit einem Vergussmedium fixiert.

Der Vorteil der Erfindung und ihrer Ausgestaltungen besteht insbesondere darin, dass zum Beispiel bei Kränen, bei denen die jeweilige Last gleichzeitig mit mehreren Seilen gehoben wird, wie dies zum Beispiel bei Portalkränen oder Portalhubwägen (van carrier) zum Ein- und Ausladen von Containern und dergleichen der Fall ist, eine im Betrieb auftretende ungleiche Längung der einzelnen Seile ausgeglichen werden kann. Ohne einen solchen Ausgleich der Längung würde sich eine Schieflage der jeweiligen Last ergeben, was zu Beschädigungen im Transportgut, aber auch zu Gefahrensituationen, zum Beispiel aufgrund einer ungleichen Belastung der einzelnen Seile führen kann.

Die Erfindung betrifft damit auch eine Verwendung einer Seilendhülse der hier und im Folgenden beschriebenen Art oder eine Verwendung mehrerer derartiger Seilendhülsen zum Ausgleich einer beim Gebrauch vorkommenden Längung eines oder mehrerer Drahtseile. Konkrete Anwendungsfälle sind Portalkräne oder Portalhubwägen, bei denen die jeweilige Last mit zumindest vier synchron bewegten Seilen angehoben oder abgesenkt wird. Weitere Anwendungsfälle sind andere Kräne, bei denen die Last mit mehreren Seilen angehoben oder abgesenkt wird. Ein nochmals weiterer Anwendungsfall sind Schiffe, zum Beispiel Fähren, mit zumindest einem höhenverstellbaren Deck oder Zwischendeck. Ein solches Zwischendeck wird bei Fähren zum Beispiel angehoben, um eine maximale Höhe des jeweiligen Decks zu erreichen und damit die Aufnahme von Lastkraftwagen oder dergleichen zu ermöglichen. Wenn ein solches Zwischendeck abgesenkt wird, ergibt sich mit dem abgesenkten Zwischendeck in an sich bekannter Art und Weise eine zusätzliche Ladefläche. Das abgesenkte Zwischendeck erlaubt damit zum Beispiel das Aufnehme von Personenkraftwagen. Dann kann nämlich in einer ersten Ebene auf der Grundfläche des Decks eine Aufnahme von Fahrzeugen und in einer parallelen, zweiten Ebene auf der Grundfläche des Zwischendecks ebenfalls eine Aufnahme von Fahrzeugen erfolgen. Die Verwendung von vertikal beweglichen Zwischendecks ist selbstverständlich nicht auf Fähren und den Transport von Fahrzeugen beschränkt. Bei solchen vertikal beweglichen - also in ihrer Höhe im Schiff einstellbaren - Decks ist notwendig, dass die vertikale Positionierung sehr exakt erfolgt, damit das beweglichen Deck an allen Aufhängepunkten hängt und sich so einerseits eine gewünschte Ausrichtung des Decks, üblicherweise eine horizontale Ausrichtung, und andererseits eine gleichmäßige Lastverteilung ergibt. Alle beschriebenen Anwendungszenarien gehen von an mehreren Aufhängepunkten hängenden Lasten aus, zum Beispiel Containern, insbesondere einer Hubvorrichtung für Container (Topspreader), oder höhenverstellbaren Zwischendecks (Hängedecks). Indem zur Aufhängung solcher Lasten zumindest eine Seilhülse der hier und im Folgenden beschriebenen Art verwendet wird, ergibt sich nicht nur eine Möglichkeit, eventuelle Längenänderungen der verwendeten Drahtseile auszugleichen, sondern auch eine einfache Möglichkeit, eine gewünschte Ausrichtung der Last, üblicherweise eine horizontale Ausrichtung, sicherzustellen. Allgemein eignen sich die hier beschriebene Seilhülse und damit gebildete Seilendverbindungen für alle zumindest zweitrumigen Hebe- oder Fördereinrichtungen sowie für zumindest zweitrumige Verspannungen, etwa zur vertikalen Ausrichtung eines Mastes oder dergleichen, oder zumindest zweitrumige Halteseile und dergleichen.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung Abänderungen und Modifikationen möglich, die durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen für den Fachmann im Hinblick auf die Lösung der Aufgabe entnehmbar sind und durch kombinierbare Merkmale zu einem neuen Gegenstand führen.

### Es zeigen

- Fig. 1: und
- Fig. 2: eine isometrische Darstellung einer Seilhülse sowie
- Fig. 3: unterschiedliche Ansichten der Seilhülse aus Fig. 1.

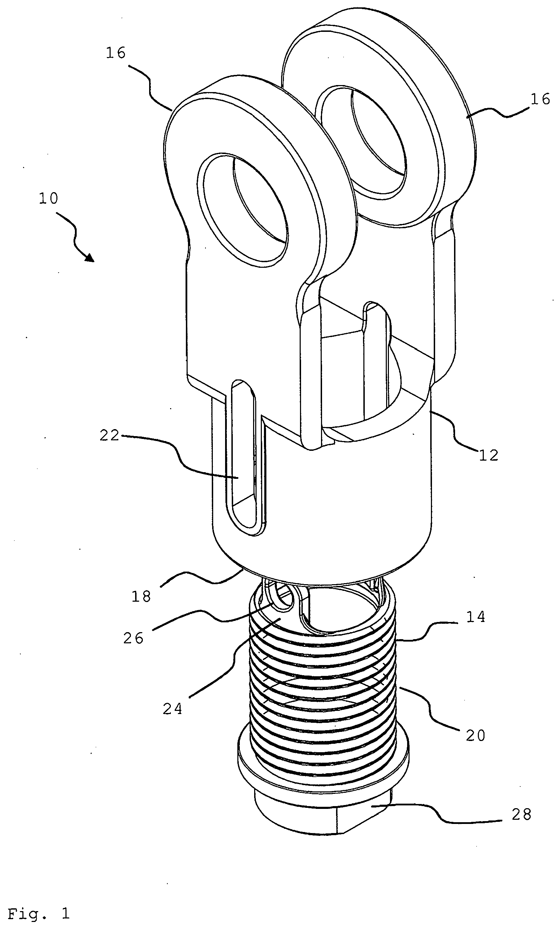

Fig. 1 zeigt in einer isometrischen Darstellung als Beispiel für eine Seilhülse 10 eine Gabel- oder Bügelseilhülse (open spelter socket). Die Seilhülse 10 ist zweiteilig ausgeführt und die beiden Teile werden im Folgenden als äußeres Gehäuse 12 (oben gezeigt) und inneres Gehäuse 14 (axial unter dem äußeren Gehäuse 12 gezeigt) bezeichnet. Das äußere Gehäuse 12 weist an seinem in der Darstellung oberen Ende die beiden Gabelenden 16 auf. Bei einer anderen Seilhülse 10 befinden sich hier andere Kontaktmittel, also zum Beispiel bei einer Ösenseilhülse (closed spelter socket) eine Öse. Ein üblicherweise zum Einführen in die Bohrungen in den Gabelenden 16 vorgesehener Bolzen ist nicht dargestellt.

An dem den Gabelenden 16 oder sonstigen Kontaktmitteln gegenüberliegenden Ende weist das äußere Gehäuse 12 ein Innengewinde 18 auf, das in der Darstellung in Fig. 1 aufgrund der gewählten Perspektive nicht erkennbar ist. Das innere Gehäuse 14 weist seinerseits ein zum Innengewinde 18 passendes Außengewinde 20 auf und ist damit insgesamt mit dem äußeren Gehäuse 12 lösbar verbindbar, indem in es in das äußere Gehäuse 12 einschraubbar ist. Durch Drehung des inneren Gehäuses 14 im äußeren Gehäuse 12 oder jede relative Drehung von äußerem und innerem Gehäuse 12, 14 gegeneinander kann eine axiale Position des inneren Gehäuses 14 im äußeren Gehäuse 12 angepasst werden. Durch diese Möglichkeit, die axiale Position des inneren Gehäuse 14 in Bezug auf das äußere Gehäuse 12 und damit auch in Bezug auf die Gabelenden 16 oder sonstige Kontaktmittel anpassen zu können, kann eine Längung eines mit der Seilhülse 10, nämlich dem inneren Gehäuse 14, verbundenen Seils kompensiert werden, indem das innere Gehäuse 14 entsprechend der festgestellten Längung des Seils weiter in das äußere Gehäuse 12 eingeschraubt wird.

In der Darstellung in Fig. 1 ist ebenfalls erkennbar, dass im äußeren Gehäuse 12 zwischen den Gabelenden 16 (oder bei einer anderen Seilhülse 10 anderen Kontaktmitteln) und dem Innengewinde 18 zwei Bohrungen 22, Langlöcher oder sonstige Freistellungen gebildet sind, die im äußeren Gehäuse radial gegenüberliegend angeordnet sind. Die Bohrungen 22 sind hier schlitzförmig ausgeführt und erlauben das Hindurchführen eines Stifts, Bolzens oder dergleichen - im Folgenden als Stift bezeichnet. Die Bohrungen 22 und ein in die Bohrungen 22 eingeführter Stift (nicht dargestellt) erlauben eine drehfeste Lagerung eines in das äußere Gehäuse 12 eingeschraubten inneren Gehäuses 14 und verhindern zumindest eine Vollumdrehung des inneren Gehäuses 14 im äußeren Gehäuse 12. Dazu weist das innere Gehäuse 14 an dessen Oberkante zumindest eine Abstellung 24 auf, die hier eine Öse 26 aufweist. Im eingeführten Zustand wirkt der Stift mit jeweils zumindest einer Abstellung 24 derart zusammen, dass eine Vollumdrehung des inneren Gehäuses 14 im äußeren Gehäuse 12 verhindert ist, indem ab einer bestimmten Rotationslage des inneren Gehäuses 14 die Abstellung 24 an den in die Bohrungen 22 eingeführten Stift anschlägt. Wenn die oder jede Abstellung 24 am inneren Gehäuse 14 als Öse 26 ausgeführt ist, ist eine Drehbarkeit des inneren Gehäuses 14 im äußeren Gehäuse 12 nur noch im Umfang der Öffnungsweite der Öse 26 möglich. Wenn die Öffnungsweite der Öse 26 auf eine Breite der Bohrungen 22 und entsprechend einen Durchmesser des in die Bohrungen 22 einführbaren Stifts abgestimmt ist, ist das innere Gehäuse 14 im äußeren Gehäuse 12 drehfest gelagert. Der Stift kann in an sich bekannter Art und Weise - zum Beispiel gesichert durch einen Splint, einen Bügel oder eine auf ein am Ende des Stifts gebildetes Gewinde aufgeschraubte Mutter- verliersicher am äußeren Gehäuse 12 fixiert werden. Wenn an der Oberkante des inneren Gehäuses 14 zwei Ösen 26 vorgesehen sind, kommt eine radial gegenüberliegende Position der beiden Ösen 26 in Betracht, so dass der Stift durch die Bohrungen 22 und beide Ösen 26 geführt werden kann. Das innere Gehäuse 14 kann damit nach jeweils einer halben Umdrehung im äußeren Gehäuse 12 drehfest gelagert werden. Bei einer Ausführungsform des inneren Gehäuses 14 mit mehr als zwei Abstellungen 24 oder Ösen 26 ist eine noch feinere Einstellung der durch das Einschrauben des inneren Gehäuses 14 in das Innengewinde 18 des äußeren Gehäuses 12 möglich. Bei mehr als zwei Abstellungen/Ösen 24, 26 wird man eine radial gleichmäßig beabstandete Anordnung vorsehen.

Bei einer Möglichkeit, einen Stift am äußeren Gehäuse 12 geeignet verliersicher zu halten, kommt auch eine Ausführungsform des äußeren Gehäuses 12 in Betracht, bei der anstelle der beiden im äußeren Gehäuse 12 radial gegenüberliegenden Bohrungen 22 nur eine Bohrung vorgesehen ist, durch die ein solcher Stift in das Innere des äußeren Gehäuses 12 einführbar ist und dort eine drehfeste Lagerung des inneren Gehäuses 14 bewirkt.

Am seiner Unterkante weist das innere Gehäuse 14 eine Formschlusskontur 28 zum Ansetzen eines Werkzeugs, zum Beispiel eines Maulschlüssels, auf. Die Formschlusskontur 28 erlaubt das Betätigen oder auch nur das Fixieren des inneren Gehäuses 14, wenn inneres und äußeres Gehäuse 14, 12 relativ zueinander verdreht werden, um eine Längenanpassung vorzunehmen. Die Formschlusskontur 28 kann, insbesondere für Seilhülsen 10, für große Lasten, im Vergleich zum Rest des inneren Gehäuses 14 deutlich größer ausgeführt sein, als dies in Fig. 1 dargestellt ist, um auch eine Fixierung zum Beispiel mit einer Zwinge oder dergleichen zu ermöglichen, wenn eine Fixierung mit einem Handwerkzeug, nämlich einem Maulschlüssel, nicht mehr in Betracht kommt.

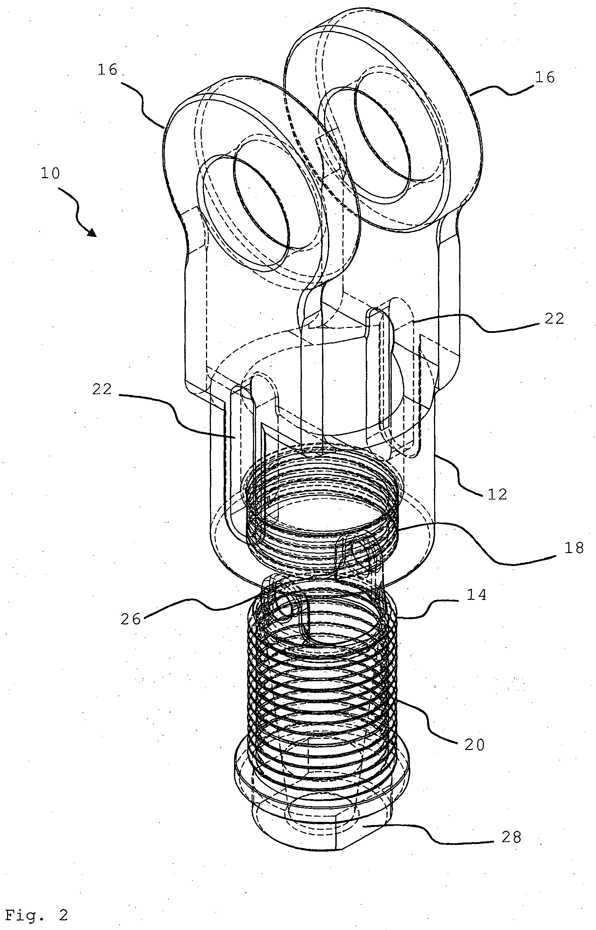

Fig. 2 zeigt die Seilhülse aus Fig. 1 in Form einer Drahtgitterdarstellung, also auch mit ansonsten verdeckten Linien. In dieser Darstellung ist das in Fig. 1 nicht sichtbare Innengewinde 18 im äußeren Gehäuse 12 gut erkennbar.

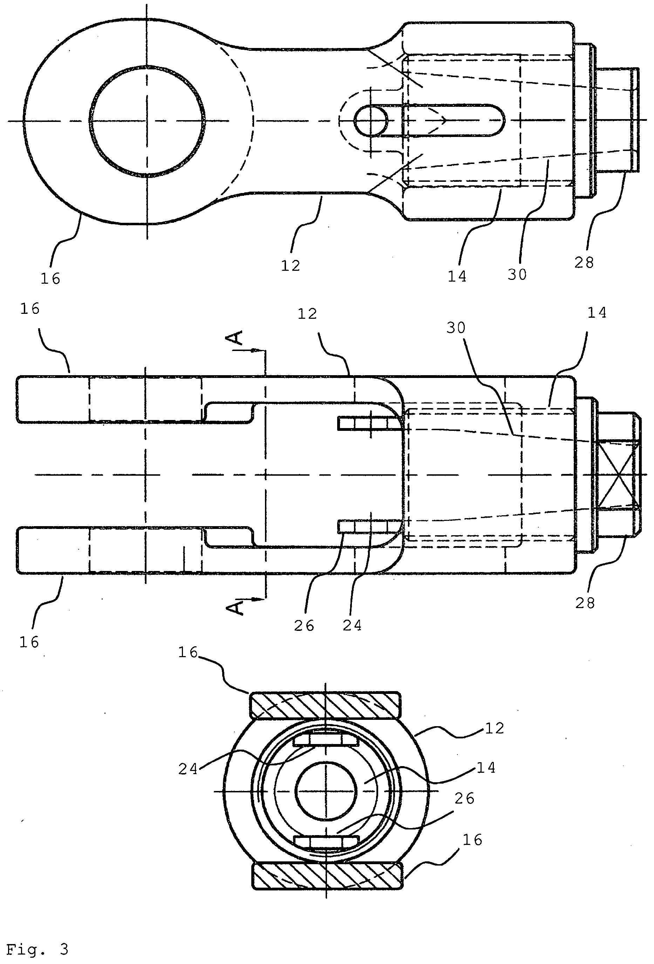

Fig. 3 zeigt unterschiedliche Ansichten der Seilhülse 10 aus Fig. 1. Die untere Darstellung in Fig. 3 ist dabei eine Schnittdarstellung entlang der in der mittleren Darstellung von Fig. 3 eingezeichneten Schnittlinie A-A.

In den beiden oberen Darstellungen in Fig. 3 ist das in das äußere Gehäuse 12 eingeschraubte innere Gehäuse 14, soweit es durch das äußere Gehäuse 12 verdeckt ist, mit gestrichelten Linien gezeigt. Die gestrichelten Linien zeigen nicht nur die Außenkontur des inneren Gehäuses 14, sondern auch dessen Innenkontur. Man erkennt dabei, dass das innere Gehäuse 14 zur Aufnahme des Seilendes und zum Vergießen des Seilendes ein konisches oder zumindest abschnittsweise konisches Innenvolumen 30 aufweist, das seinen geringsten Durchmesser an einer zum Einführen des Seilendes vorgesehenen Unterkante aufweist. Eine konische oder sich zumindest zur Unterkante des inneren Gehäuses 14 verjüngende Kontur des Innenvolumens 30 des inneren Gehäuses 14 ist vorteilhaft, wenn es darum geht, die angestrebte hohe Bruchfestigkeit der Verbindung des Seilendes mit der Seilhülse 10, hier also dem inneren Gehäuse 14 der Seilhülse 10, zu erreichen.

Die besondere Kontur des Innenvolumens 30 des inneren Gehäuses 14 ist auch in der unteren Darstellung in Fig. 3 erkennbar, die entsprechend der Schnittebene einen Blick in die Seilhülse 10 und deren inneres Gehäuse 14 und dabei einen Blick in das sich nach unten hin verjüngende Innenvolumen 30 des inneren Gehäuses 14 darstellt. Ein in dieses Innenvolumen 30 eingeführtes Seilende (nicht dargestellt) kann in dem Innenvolumen 30 in an sich bekannter Art und Weise vergossen werden (Fixierung mit einem Vergussmedium), um die dauerhafte Verbindung mit der Seilhülse 10 zu erreichen.

Bei einer nicht dargestellten Ausführungsform ist die Seilhülse 10 dreiteilig und umfasst ein äußeres Gehäuse 12, ein inneres Gehäuse 14 und ein Zwischengehäuse. Während bei der in Fig. 1 gezeigten Ausführungsform das äußere Gehäuse 12 das Innengewinde 18 zu Aufnahme des inneren Gehäuses 14 aufgewiesen hatte, ist dieses Innengewinde 18 bei einer dreiteiligen Seilhülse 10 im Zwischengehäuse vorgesehen. Das Zwischengehäuse ist dabei vom äußeren Gehäuse 12 in einer axial fixierten Position aufnehmbar, wie dies zum Beispiel von sogenannten fast connector sockets bekannt ist. Indem das Innengehäuse 14 in das Zwischengehäuse in gleicher Weise einschraubbar ist, wie dies zuvor für das Einschrauben in das äußere Gehäuse 12 erläutert wurde, und das Zwischengehäuse lösbar mit dem äußeren Gehäuse 12 kombinierbar ist, ergeben sich die oben anhand von Fig. 1 erläuterten Vorteile im Hinblick auf eine Anpassbarkeit an eine Längung des Seils in Verbindung mit den Vorteilen einer Seilverbindung nach Art eines fast connector sockets, indem das Zwischengehäuse mit unterschiedlichen Arten von äußeren Gehäusen 12 verbindbar und damit am Ende des Seils unterschiedliche Kontaktmittel anbringbar sind. Diese Ergänzung kommt für alle in den vorangehenden Figuren dargestellten Ausführungsformen in Betracht, wenn jeweils "äußeres Gehäuse 12 mit einem Innengewinde 18" durch "äußeres Gehäuse 12 mit einem vom äußeren Gehäuse 12 in einer axial fixierten Position aufnehmbaren Zwischengehäuse und einem im Zwischengehäuse gebildeten Innengewinde" ersetzt wird.

Einzelne im Vordergrund stehende Aspekte der hier eingereichten Beschreibung lassen sich damit kurz wie folgt zusammenfassen: Angegeben werden eine Seilhülse 10 mit einem äußeren Gehäuse 12 und einem zur Aufnahme eines Seilendes vorgesehenen inneren Gehäuse 14, wobei eine lösbare Verbindbarkeit des inneren Gehäuses 14 mit dem äußeren Gehäuse 12 eine Anpassung einer axialen Position des inneren Gehäuses 14 im äußeren Gehäuse 12 erlaubt, sowie eine Seilendverbindung mit einer solchen Seilhülse 10. Bei einer besonderen Ausführungsform der Seilhülse 10 wird die Anpassung der axialen Position des inneren Gehäuses 14 in Bezug auf das äußere Gehäuse 12 und dessen Kontaktmittel, also zum Beispiel Gabelenden 16, dadurch realisiert, dass das innere Gehäuse 14 in das äußere Gehäuse 12 einschraubbar ist, so dass sich eine wirksame Lage eines Endpunkts eines mit dem inneren Gehäuse 14 verbindbaren oder verbundenen Seilendes in Bezug auf das jeweilige Kontaktmittel durch Ein- oder Ausschrauben des inneren Gehäuses 14, also jede Relativrotation des inneren Gehäuses 14 in Bezug auf das äußere Gehäuse 12, anpassen lässt.

### Bezugszeichenliste

- 10: Seilhülse
- 12: äußeres Gehäuse
- 14: inneres Gehäuse
- 16: Gabelende
- 18: Innengewinde (im äußeren Gehäuse)
- 20: Außengewinde (am inneren Gehäuse)
- 22: Bohrung (im äußeren Gehäuse)
- 24: Abstellung (am inneren Gehäuse)
- 26: Öse (als Abstellung am inneren Gehäuse oder in einer Abstellung am inneren Gehäuse)
- 28: Formschlusskontur
- 30: Innenvolumen (des inneren Gehäuses)

## Patentansprüche

1. Seilendhülse (10) mit einem äußeren Gehäuse (12) und einem inneren Gehäuse (14),
wobei das äußere Gehäuse (12) Kontaktmittel (16) zum Anheben, Absenken oder Halten einer Last umfasst,
wobei das innere Gehäuse (14) zur Aufnahme eines Seilendes vorgesehenist, indem mit dem inneren Gehäuse (14) ein Seilende durch Vergießen des Seilendes im inneren Gehäuse (14) verbindbar ist und
wobei eine lösbare Verbindbarkeit des inneren Gehäuses (14) mit dem äußeren Gehäuse (12) eine Anpassung einer axialen Position des inneren Gehäuses (14) im äußeren Gehäuse (12) sowie eine Kompensation einer eventuellen Längung eines mit der Seilendhülse (10) kombinierten Seils erlaubt,
wobei das innere Gehäuse (14) ein Außengewinde (20) und das äußere Gehäuse (12) in einem zur Aufnahme des inneren Gehäuses (14) vorgesehenen Bereich ein auf das Außengewinde (20) abgestimmtes Innengewinde (18) aufweist,
wobei die axiale Position des inneren Gehäuses (14) im äußeren Gehäuse (12) durch Einschrauben des inneren Gehäuses (14) in das äußere Gehäuse (12) anpassbar ist, **dadurch gekennzeichnet, dass**
das äußere Gehäuse (12) zumindest eine Bohrung (22) in Form eines Langlochs zum Einführen eines Stifts und das innere Gehäuse (14) an einer Oberkante ein oder mehrere Abstellungen (24) oder Ösen (26) aufweist, wobei der Stift im eingeführten Zustand mit jeweils zumindest einer Abstellung (24) oder Öse (26) derart zusammenwirkt, dass eine Vollumdrehung des inneren Gehäuses (14) im äußeren Gehäuse (12) verhindert ist.

2. Seilendhülse (10) nach Anspruch 1, wobei das innere Gehäuse (14) zur Aufnahme eines Seilendes ein konisch geformtes Innenvolumen (30) aufweist.

3. Seilendhülse (10) nach einem der Ansprüche 1 oder 2, mit einem vom äußeren Gehäuse (12) in einer axial fixierten Position aufnehmbaren Zwischengehäuse, wobei das Zwischengehäuse das Innengewinde (18) aufweist und wobei die axiale Position des inneren Gehäuses (14) im äußeren Gehäuse (12) durch Einschrauben des inneren Gehäuses (14) in das Zwischengehäuse anpassbar ist.

4. Seilendverbindung, bei der ein Draht- oder Stahlseil mit einer Seilendhülse (10) nach einem der vorangehenden Ansprüche kombiniert ist.

5. Seilendverbindung nach Anspruch 4, wobei das Seilende in einem inneren Gehäuse (14) der Seilendhülse (10) mit einem Vergussmedium fixiert ist.

6. Verwendung einer Seilendhülse (10)
mit einem äußeren und einem inneren Gehäuse (12,14), wobei das äußere Gehäuse (12) Kontaktmittel (16) zum Anheben, Absenken oder Halten einer Last umfasst, wobei in dem inneren Gehäuse (14) ein Seilende durch Vergiessen fixiert ist und wobei eine lösbare Verbindbarkeit des inneren Gehäuses (14) mit dem äußeren Gehäuse (12) eine Anpassung einer axialen Position des inneren Gehäuses (14) im äußeren Gehäuse (12) sowie eine Kompensation einer eventuellen Längung eines mit der Seilendhülse (10) kombinierten Seils erlaubt, oder
einer Seilendhülse (10) nach einem der Ansprüche 1 bis 3 oder
einer Seilendverbindung nach einem der Ansprüche 4 oder 5
zum Ausgleich einer Längenänderung eines oder mehrerer zum Anheben oder Absenken einer jeweiligen Last vorgesehenen Drahtseils oder Drahtseile.

7. Verwendung einer Seilendhülse (10) oder einer Seilendverbindung nach Anspruch 6 bei einem Portalhubwagen oder einem Portalkran zum Transport von Containern, wobei eine zum Anheben von Containern vorgesehene Hubvorrichtung an zumindest zwei synchron, aber unabhängig voneinander beweglichen Drahtseilen hängt und wobei zumindest eines der Drahtseile mit einer solchen Seilendhülse (10) oder einer solchen Seilendverbindung angeschlagen ist.

8. Verwendung einer Seilendhülse (10) oder einer Seilendverbindung nach Anspruch 6 bei einem Schiff mit zumindest einem in seiner Höhe einstellbaren Hängedeck, wobei das Hängedeck an einer Mehrzahl von synchron, aber unabhängig voneinander beweglichen Drahtseilen hängt und wobei zumindest eines der Drahtseile mit einer solchen Seilendhülse (10) oder einer solchen Seilendverbindung angeschlagen ist.

## Claims

1. A cable termination sleeve (10) having an outer housing (12) and an inner housing (14),
wherein the outer housing (12) comprises contact means (16) for raising, lowering or holding a load,
wherein the inner housing (14) is provided for receiving a cable termination, in that a cable termination can be connected with the inner housing (14) through socketing of the cable termination in the inner housing (14) and
wherein a releasable connectivity of the inner housing (14) with the outer housing (12) allows an adjustment of an axial position of the inner housing (14) in the outer housing (12) as well as a compensation of a possible elongation of a cable combined with the cable termination sleeve (10),
wherein the inner housing (14) has an external thread (20) and the outer housing (12) has an internal thread (18), which is matched to the external thread (20), in an area provided for receiving the inner housing (14),
wherein the axial position of the inner housing (14) in the outer housing (12) is adjustable by means of screwing the inner housing (14) into the outer housing (12), **characterized in that**
the outer housing (12) has at least one bore (22) in the form of an oblong hole for the insertion of a pin and the inner housing (14) has one or more stop mechanisms (24) or lugs (26) on an upper edge,
wherein the pin interacts in the inserted state respectively with at least one stop mechanism (24) or lug (26) in such a way that a complete revolution of the inner housing (14) in the outer housing (12) is prevented.

2. The cable termination sleeve (10) according to claim 1, wherein the inner housing (14) for receiving a cable termination has a conically shaped interior volume (30).

3. The cable termination sleeve (10) according to one of claims 1 or 2, with an intermediate housing which can be received in an axially fixed position by the outer housing (12), wherein the intermediate housing comprises the inner thread (18) and wherein the axial position of the inner housing (14) in the outer housing (12) is adjustable by means of screwing the inner housing (14) into the intermediate housing.

4. A cable termination connection, in which a wire or steel cable is combined with a cable termination sleeve (10) according to one of the preceding claims.

5. The cable termination connection according to claim 4, wherein the cable termination is fixed in an inner housing (14) of the cable termination sleeve (10) with a socketing medium.

6. A use of a cable termination sleeve (10)
having an outer and an inner housing (12, 14), wherein the outer housing (12) comprises contact means (16) for raising, lowering or holding a load, wherein a cable termination is fixed in the inner housing (14) by means of socketing and wherein a releasable connectivity of the inner housing (14) with the outer housing (12) allows an adjustment of an axial position of the inner housing (14) in the outer housing (12) as well as a compensation of a possible elongation of a cable combined with the cable termination sleeve (10), or
a cable termination sleeve (10) according to one of claims 1 to 3 or
a cable termination connection according to one of claims 4 or 5
for equalizing a change in length of one wire cable or a plurality of wire cables provided for raising or lowering a respective load.

7. The use of a cable termination sleeve (10) or a cable termination connection according to claim 6 in a straddle carrier or gantry crane for the transporting of containers, wherein a lifting device for the raising of containers hangs from at least two wire cables which are synchronous but move independently of one another and wherein at least one of the wire cables is fastened to such a cable termination sleeve (10) or such a cable termination connection.

8. The use of a cable termination sleeve (10) or a cable termination connection according to claim 6 in a ship with at least one height-adjustable suspension deck, wherein the suspension deck hangs from a plurality of wire cables which are synchronous but move independently of one another and wherein at least one of the wire cables is fastened to such a cable termination sleeve (10) or such a cable termination connection.

## Revendications

1. Cosse d'extrémité de câble (10) comprenant un boîtier extérieur (12) et un boîtier intérieur (14),
le boîtier extérieur (12) comportant des moyens de contact (16) servant à lever, abaisser ou maintenir une charge,
le boîtier intérieur (14) étant destiné à recevoir une extrémité de câble de façon à pouvoir relier une extrémité de câble au boîtier intérieur (14) par scellement de l'extrémité de câble dans le boîtier intérieur (14) et
une liaison amovible du boîtier intérieur (14) avec le boîtier extérieur (12) permettant une adaptation de la position axiale du boîtier intérieure (14) dans le boîtier extérieur (12) et une compensation d'un éventuel allongement d'un câble combiné à la cosse d'extrémité de câble (10),
le boîtier intérieur (14) comportant un filetage extérieur (20) et le boîtier extérieur (12) comportant, dans une région destinée à recevoir le boîtier intérieur (14), un filetage intérieur (18) adapté au filetage extérieur (20),
la position axiale du boîtier intérieure (14) dans le boîtier extérieur (12) pouvant être adaptée par vissage du boîtier intérieur (14) dans le boîtier extérieur (12), **caractérisée en ce que**
le boîtier extérieur (12) comporte au moins un perçage (22) se présentant sous la forme d'un trou oblong destiné à l'insertion d'une goupille et le boîtier intérieur (14) comportant au niveau d'un bord supérieur une ou plusieurs extensions (24) ou un ou plusieurs oeillets (26), la goupille coopérant à l'état inséré avec au moins une extension (24) ou oeillet (26) de façon à empêcher une rotation complète du boîtier intérieur (14) dans le boîtier extérieur (12).

2. Cosse d'extrémité de câble (10) selon la revendication 1, dans laquelle le boîtier intérieur (14) destiné à recevoir une extrémité du câble a un volume intérieur (30) de forme conique.

3. Cosse d'extrémité de câble (10) selon l'une des revendications 1 ou 2, comprenant un boîtier intermédiaire pouvant être reçu par le boîtier extérieur (12) dans une position axialement fixe, le boîtier intermédiaire comportant le filetage intérieur (18) et la position axiale du boîtier intérieur (14) dans le boîtier extérieur (12) pouvant être adaptée par vissage du boîtier intérieur (14) dans le boîtier intermédiaire.

4. Liaison d'extrémité de câble, dans laquelle un câble métallique ou un câble d'acier est combiné à une cosse d'extrémité de câble (10) selon l'une des revendications précédentes.

5. Liaison d'extrémité de câble selon la revendication 4, dans laquelle l'extrémité de câble est fixée à un milieu de scellement dans un boîtier intérieur (14) de la cosse d'extrémité de câble (10).

6. Utilisation d'une cosse d'extrémité de câble (10) comprenant
des boîtiers extérieur et intérieur (12, 14), le boîtier extérieur (12) comportant des moyens de contact (16) servant à lever, abaisser ou maintenir une charge, une extrémité de câble étant fixée dans le boîtier intérieur (14) par scellement et une liaison amovible du boîtier intérieur (14) avec le boîtier extérieur (12) permettant une adaptation de la position axiale du boîtier intérieur (14) dans le boîtier extérieur (12) et une compensation d'un éventuel allongement d'un câble combiné à la cosse d'extrémité de câble (10), ou
une cosse d'extrémité de câble (10) selon l'une des revendications 1 à 3 ou
une liaison d'extrémité de câble selon l'une des revendications 4 ou 5
pour compenser une variation de longueur d'une ou de plusieurs câbles servant à lever ou abaisser une charge.

7. Utilisation d'une cosse d'extrémité de câble (10) ou d'une liaison d'extrémité de câble selon la revendication 6 dans un chariot de levage de portique ou une grue à portique pour le transport de conteneurs, un dispositif de levage destiné à lever des conteneurs étant suspendu à au moins deux câbles métalliques mobiles de manière synchrone mais indépendamment l'un de l'autre et au moins un des câbles métalliques étant fixé à une telle cosse d'extrémité de câble (10) ou une telle liaison d'extrémité du câble.

8. Utilisation d'une cosse d'extrémité de câble (10) ou d'une liaison d'extrémité de câble selon la revendication 6 dans un navire comportant au moins un pont suspendu réglable en hauteur, le pont suspendu étant suspendu à une pluralité de câbles métalliques mobiles de manière synchrone mais indépendamment les uns des autres et au moins un des câbles métalliques étant fixé à une telle cosse d'extrémité de câble (10) ou une telle liaison d'extrémité de câble.
